# EUROPÄISCHE PATENTANMELDUNG

(11) **EP 1 531 282 A1**
(43) Veröffentlichungstag der Anmeldung: **18.05.2005**
(21) Anmeldenummer: 03104225.2
(22) Anmeldetag: 17.11.2003
(51) Int. Cl.: F16F 9/04

(54) **Kombinierte Lager-Dämpfer-Einheit und Verwendung einer derartigen Lager-Dämpfer-Einheit**

(71) Anmelder: Ford Global Technologies, LLC, A subsidary of Ford Motor Company, Dearborn, MI 48126 (US)
(72) Erfinder: Leonhard, Torsten, 41539, Dormagen (DE)
(74) Vertreter: Drömer, Hans-Carsten, Dipl.-Ing.

(57) **Zusammenfassung**

Die Erfindung betrifft eine kombinierte Lager-Dämpfer-Einheit (1) zur Aufnahme einer Brennkraftmaschine (11) im Motorraum eines Kraftfahrzeuges, welche zwischen Karosserie (12) und Brennkraftmaschine (11) angeordnet ist und diese miteinander verbindet,.

Die Erfindung betrifft des weiteren eine Verwendung einer derartigen Lager-Dämpfer-Einheit (1).

Es soll eine Lager-Dämpfer-Einheit (1) bereitgestellt werden, mit dem die nach dem Stand der Technik bekannten Nachteile überwunden werden, und die insbesondere ein verbessertes Verhalten bei hochfrequenten Schwingung aufweist. Des weiteren soll eine Verwendung einer derartigen Lager-Dämpfer-Einheit (1) aufgezeigt werden.

Gelöst wird diese Aufgabe durch eine Lager-Dämpfer-Einheit, bei der die kombinierte Lager-Dämpfer-Einheit (1) mindestens einen Gasbalg (2) und einen auf den Gasbalg (2) wirkenden Stempel (3) umfaßt, wobei dieser mindestens eine Gasbalg (2) sowohl die Last der Brennkraftmaschine (11) in seiner Funktion als Lager trägt als auch die Schwingungsanregung der Karosserie (12) durch die Brennkraftmaschine (11) in seiner Funktion als Dämpfer mindert.

Verwendung findet eine solche kombinierte Lager-Dämpfer-Einheit (1) beispielsweise als Motorlagerung.

## Beschreibung

Die Erfindung betrifft eine kombinierte Lager-Dämpfer-Einheit zur Aufnahme einer Brennkraftmaschine im Motorraum eines Kraftfahrzeuges, welche zwischen Karosserie und Brennkraftmaschine angeordnet ist und diese miteinander verbindet.

Des Weiteren betrifft die Erfindung die Verwendung einer derartigen Lager-Dämpfer-Einheit.

Im Zuge der Industrialisierung und Motorisierung wurde die zunehmende Geräuschemission ein immer ernster zu nehmendes Umweltproblem, das sie sich nicht nur grundsätzlich auf die Lebensqualität, sondern insbesondere auch auf die Gesundheit der dem zunehmenden Lärm ausgesetzten Menschen nachteilig auswirkte. In der Folge nahm sich auch der Gesetzgeber dieser Problematik an und erließ Vorschriften, in denen die einzuhaltenden Geräuschgrenzwerte festgelegt wurden. Die wichtigsten Vorschriften sind dabei das Bundesimmissionsschutzgesetz (BImSchG) und die Richtlinien der Europäischen Kommission.

Zunächst konzentrierte sich die Entwicklung bei der Geräuschminderung auf den Motor als der dominierenden Geräuschquelle des Kraftfahrzeuges. Es erschien anfangs auch sinnvoll, Maßnahmen hinsichtlich der lautesten Geräuschquelle, nämlich dem Motor, zu ergreifen, der - beispielsweise bei der beschleunigten Vorbeifahrt - den mit Abstand größten Geräuschanteil aufwies. Dieses Vorgehen führte dazu, daß der Geräuschanteil des Motors d. h. das eigentliche Motorengeräusch stetig abnahm und heute keine spezifische Geräuschquelle mehr ausgemacht werden kann, welche die Gesamtgeräuschemission des Kraftfahrzeuges dominiert.

Um den immer schärferen gesetzlichen Vorschriften hinsichtlich der zulässigen Geräuschemission eines Kraftfahrzeuges weiterhin gerecht zu werden, sind die Konstrukteure daher gezwungen, sich mit sämtlichen Geräuschquellen, welche zu der Gesamtgeräuschemission beitragen, auseinander zu setzen.

Als Geräuschquellen an einem Kraftfahrzeug können unterschieden werden:
■ Strömungsgeräusche,
■ Geräusche durch Körperschallabstrahlung, und
■ Geräusche durch Körperschalleinleitung in die Karosserie über die Motorlagerung.

Zu den Strömungsgeräuschen zählen beispielsweise das Auspuffmündungsgeräusch, das Ansauggeräusch und das Kühler-Lüftergeräusch, wohingegen zu den Geräuschen durch Körperschallabstrahlung das eigentliche Motorgeräusch und die Abstrahlung der Auspuffanlage gehört. Die durch Stöße und Wechselkräfte zu Körperschallschwingungen angeregte Motorstruktur strahlt über seine Motoroberflächen den Körperschall als Luftschall ab und generiert auf diese Weise das eigentliche Motorgeräusch. Die wichtigsten Bauteile mit Stoß- und Kraftanregung sind das Kurbelgehäuse, der Zylinderblock, der Zylinderkopf, der Kurbeltrieb, der Kolben und der Ventiltrieb. Diese Bauteile sind den Massen- und Gaskräften ausgesetzt.

Die beiden genannten Gruppen von Geräuschen sind verantwortlich für das Vorbeifahrgeräusch, wobei das Fahrzeuginnengeräusch ebenfalls von diesen Quellen verursacht wird. Von besonderer Bedeutung für den akustischen Fahrkomfort ist aber die Körperschalleinleitung über die Motorlagerung, welche aus diesem Grunde Gegenstand der vorliegenden Erfindung ist.

Nach dem Stand der Technik werden für die Lagerung des Motors auf Gummi basierende Bauteile verwendet, die - mit zusätzlichen Elementen versehen - auch als Verbundlager ausgebildet werden können. Das Einbringen weiterer Elemente dient dabei in der Regel der bedarfsgerechten Einflußnahme auf die Eigenschaften des Gummilagers, insbesondere der Beeinflussung der Steifigkeit bzw. der Verformbarkeit d.h. der Gestaltfestigkeit des Lagers. Auf diese Weise kann auch Einfluß auf die Progression der Federung und Dämpfung des Lagers - d. h. auf die Zunahme der Feder- und Dämpfrate mit steigender Last - genommen werden, wobei ein Gummielement schon über eine gewisse orginäre Progression verfügt, die diesem Element gewissermaßen immanent ist.

Alternativ können die Eigenschaften des Lagers in einem gewissen Rahmen auch durch eine geeignete Formgebung des Lagers eingestellt werden. Eine zunehmende Progression der Federung und Dämpfung wird zum Beispiel durch eine domförmige Gestaltung des Lagerelements realisiert, d. h. durch eine Verjüngung des Gummilagers in Richtung Brennkraftmaschine.

Herkömmliche Gummilager zeigen zudem eine dynamische Steifigkeit d. h. ihre Steifigkeit nimmt mit höher werdender Frequenz zu, weshalb die dämpfenden und federnden Eigenschaften dieser Lager mit steigender Frequenz abnehmen. Hochfrequente Schwingungen werden besser übertragen, was eigentlich vermieden werden sollte. Eine herkömmliche Motorlagerung leitet folglich höhere Frequenzen besser als niedrige. Nachteilig ist dies insbesondere im Hinblick auf hochfrequente Geräuschquellen wie das Nageln eines Dieselmotors aufgrund der Selbstzündung und die Kettengeräusche - beispielsweise - einer Kette, welche angetrieben durch die Kurbelwelle, die Nockenwelle, die Ölpumpe und die Einspritzpumpe in Drehung versetzt.

Im Rahmen der vorliegenden Erfindung werden Schwingungen mit einer Frequenz von 300 Hz und mehr als hochfrequente Schwingungen bezeichnet.

Grundsätzlich sind die Möglichkeiten, die Eigenschaften eines derartigen Gummilagers zu beeinflussen, sehr beschränkt. Erstrebenswert ist es aber, die Steifigkeiten bzw. die Feder- und Dämpfrate eines solchen Lagers in Richtung der drei senkrecht aufeinander stehenden Belastungsrichtungen, nämlich in Längsrichtung, Querrichtung und vertikal, möglichst unabhängig voneinander einstellen zu können, weil die Anforderungen an die Motorlagerung im Hinblick auf diese drei Richtungen unterschiedlich sind. Belastungen in Längs- und Querrichtung ergeben sich in erster Linie durch die Verzögerung und Beschleunigung des Fahrzeuges und der damit einhergehenden Trägheits- und Reaktionskräfte, wohingegen die vertikalen Beanspruchungen vorwiegend von der anteiligen Motorgewichtskraft sowie von den Betriebskräften und den mit diesen im Zusammenhang stehenden Massenkräften dominiert werden.

An dieser Stelle wird angemerkt, daß im Rahmen der vorliegenden Erfindung die Längsrichtung der Längsrichtung des Kraftfahrzeuges und die Querrichtung der Querrichtung des Kraftfahrzeuges entspricht. Vertikal bedeutet grundsätzlich die Richtung, die senkrecht auf der Ebene steht, welche durch die Längsrichtung und Querrichtung aufgespannt wird. Wird aber im Zusammenhang mit der Motorlagerung von einer vertikalen Richtung gesprochen, so ist damit die vertikale Achse der Motorlagerung gemeint, die nicht mit der vertikalen Achse des Fahrzeuges gleichgerichtet sein muß bzw. nur dann parallel zu der vertikalen Achse des Kraftfahrzeuges ist, wenn die Motorlagerung entsprechend angeordnet bzw. ausgerichtet ist.

Vor diesem Hintergrund ist es die Aufgabe der vorliegenden Erfindung eine kombinierte Lager-Dämpfer-Einheit zur Aufnahme einer Brennkraftmaschine im Motorraum eines Kraftfahrzeuges bereitzustellen, mit dem die nach dem Stand der Technik bekannten Nachteile überwunden werden, und die insbesondere ein verbessertes Verhalten bei hochfrequenten Schwingungen aufweist.

Eine weitere Teilaufgabe der vorliegenden Erfindung ist es, eine Verwendung einer derartigen Lager-Dämpfer-Einheit aufzuzeigen.

Gelöst wird die erste Teilaufgabe durch eine kombinierte Lager-Dämpfer-Einheit, die dadurch gekennzeichnet ist, daß die kombinierte Lager-Dämpfer-Einheit mindestens einen Gasbalg und einen auf den Gasbalg wirkenden Stempel umfaßt, wobei dieser mindestens eine Gasbalg sowohl die Last der Brennkraftmaschine in seiner Funktion als Lager trägt, als auch die Schwingungsanregung der Karosserie durch die Brennkraftmaschine in seiner Funktion als Feder und Dämpfer mindert.

Mittels der erfindungsgemäßen Lager-Dämpfer-Einheit kann die Körperschalleinleitung über die Motorlagerung in die Fahrzeugkarosserie im Bereich hochfrequenter Schwingungen erheblich vermindert werden, wodurch der akustische Fahrkomfort wesentlich verbessert wird. Die pneumatische Motorlagerung verfügt über bessere Feder- und Dämpfereigenschaften als die herkömmlichen Gummilager nach dem Stand der Technik und isoliert die Karosserie in vorteilhafter Weise von der Brennkraftmaschine als Geräuschquelle.

Wie im Rahmen der Figurenbeschreibung noch näher erläutert werden wird, haben Messungen gezeigt, daß sich mittels der erfindungsgemäßen, pneumatischen Motorlagerung signifikante Verbesserungen gegenüber herkömmlichen Gummilagerungen erzielen lassen und die guten isolierenden Eigenschaften von Gas, vorzugsweise Luft, bei der Federung und Dämpfung der Motorschwingungen in vollem Umfang zum Tragen kommen d. h. genutzt werden können.

Mit der erfindungsgemäßen, pneumatischen Motorlagerung wird ein völlig neuartiges Konzept zur Aufnahme einer Brennkraftmaschine im Motorraum eines Kraftfahrzeuges bereitgestellt, bei dem es sich nicht um eine Weiterentwicklung eines bereits im Stand der Technik aufgezeigten Lösungsansatzes handelt. Vielmehr liegt mit der erfindungsgemäßen Lager-Dämpfer-Einheit eine erstmalig vorgeschlagene, andersartige Motorlagerung vor, die sich dadurch auszeichnet, daß Gas als federndes und dämpfendes Medium verwendet wird.

Die kombinierte Lager-Dämpfer-Einheit umfaßt dabei mindestens einen mit Gas als Druckmedium gefüllten Balg, auf den ein Stempel in der Art einwirkt, daß bei Belastung das im Balg befindliche Gas mit Hilfe des Stempels komprimiert wird, wobei mit zunehmender Belastung die Feder- und Dämpfrate der Lager-Dämpfer-Einheit progressiv zunimmt. Wird der Gasbalg entlastet, entspannt sich das Gas und gibt die in ihm gespeicherte Energie wieder ab.

Weitere Vorteile ergeben sich durch eine vorteilhafte Ausgestaltung der erfindungsgemäßen Lager-Dämpfer-Einheit. Diese werden im Rahmen der bevorzugten Ausführungsformen, wie sie sich aus den Unteransprüchen ergeben, beschrieben.

Vorteilhaft sind Ausführungsformen der kombinierten Lager-Dämpfer-Einheit, bei denen der Stempel motorseitig und der mindestens eine Gasbalg karosserieseitig angeordnet ist.

Dabei sind Ausführungsformen der kombinierten Lager-Dämpfer-Einheit vorteilhaft, bei denen der mindestens eine Gasbalg am Stempel fixiert ist.

Diese Ausführungsform ermöglicht es, den Gasbalg lose auf dem Längsträger der Fahrzeugkarosserie anzuordnen, so daß dieser in Längs- und Querrichtung weitestgehend frei beweglich bleibt und auf dem Längsträger bzw. relativ zu dem Längsträger gleiten kann. Bei dieser Ausführungsform nimmt der mindestens eine Gasbalg in erster Linie vertikale Belastungen auf. Bei dieser Ausführungsform werden dann vorteilhafterweise noch Mittel vorgesehen, mit denen die Aufnahme von Quer- und Längsbelastungen ermöglich wird.

Diese Ausführungsformen der kombinierten Lager-Dämpfer-Einheit hat den Vorteil, daß die Belastungen nahezu vollständig vom Gas aufgenommen werden und der Anteil der Federung und Dämpfung, welcher sich durch die Deformation des Gasbalgs an sich d. h. des Gasbalgmaterials ergibt, gering gehalten wird. Eine Deformation des Gasbalgmaterials, welches in der Regel Gummi ist, würde nämlich in letzter Konsequenz auf eine Federung und Dämpfung nach Art eines herkömmlichen Gummilagers hinauslaufen d. h. auf eine Lagerung - d. h. Federung und Dämpfung - mittels Gummi, welche durch den erfindungsgemäßen Lösungsvorschlag gerade vermieden und umgangen werden soll.

Grundsätzlich umfaßt die vorliegende Erfindung aber auch Ausführungsformen, bei denen der Gasbalg sowohl motorseitig als auch karosserieseitig fixiert ist. Bei dieser Ausführungsform ist aber dann der Anteil der Federung und Dämpfung, welcher sich aus einer Deformation des Gasbalgmaterials ergibt, größer als bei der zuvor beschriebenen Lagerung, wobei aber nach wie vor der Hauptteil der Belastung von dem Gas aufgenommen wird, so daß die Vorteile der erfindungsgemäßen Motorlagerung gegenüber einer herkömmlichen Motorlagerung auch bei dieser Ausführungsform vollständig zum Tragen kommen.

Vorteilhaft sind Ausführungsformen der kombinierten Lager-Dämpfer-Einheit, bei denen eine erste Halterung vorgesehen ist, mit der die kombinierte Lager-Dämpfer-Einheit karosserieseitig fixierbar ist. Diese Halterung nimmt dann beispielsweise den mindestens einen Gasbalg auf.

Vorteilhaft sind des weiteren Ausführungsformen der kombinierten Lager-Dämpfer-Einheit, bei denen eine zweite Halterung vorgesehen ist, mit der die kombinierte Lager-Dämpfer-Einheit motorseitig fixierbar ist. Dabei kann grundsätzlich der Stempel auch als zweite Halterung dienen oder mit dieser zweiten Halterung als einstückiges Bauteil ausgebildet werden.

Vorteilhaft sind des weiteren Ausführungsformen der kombinierten Lager-Dämpfer-Einheit, bei denen ein Käfig vorgesehen ist, in den der Gasbalg eingebettet ist. Dabei können die Innenwände des Käfigs - unter Umständen auch bereits im unbelasteten Zustand des Gasbalgs - direkt am Gasbalg anliegen oder beabstandet zum Gasbalg angeordnet sein. Bei der ersten Variante dient der Käfig gewissermaßen als Stützkorsett für den Gasbalg, welcher selbst über keine allzu gestaltfeste äußere Form verfügt, in der Regel ballonförmig ausgebildet ist und ohne Gasfüllung in sich zusammenfällt. Dabei stützt sich der Gasbalg an den Innenwänden des Käfigs ab. Er besitzt dann lediglich die Fähigkeit vertikale Belastungen aufzunehmen.

Vorteilhaft sind aber - wie bereits angesprochen - Ausführungsformen der kombinierten Lager-Dämpfer-Einheit, bei denen der mindestens eine Gasbalg im unbelasteten Zustand von der Innenseite des Käfigs beabstandet angeordnet ist, so daß sich zwischen Innenseite des Käfigs und Gasbalg ein Spalt ausbildet.

Wird der Käfig in der Art ausgebildet, daß die Innenwände beabstandet zum Gasbalg angeordnet sind, können an den Innenwänden weitere federnde Elemente befestigt werden. Diese Ausführungsform gestattet eine weitgehende Unabhängigkeit bei der Wahl der einzelnen Steifigkeiten der Motorlagerung im Hinblick auf die drei Hauptbelastungsrichtungen, nämlich in Längs- und Querrichtung und vertikal dazu. Somit ist ein entscheidender Vorteil dieser Ausführungsform - insbesondere im Hinblick auf die herkömmlichen Gummilager - die Entkopplung dieser drei Belastungsrichtungen hinsichtlich der Steifigkeiten. Im Rahmen der Figurenbeschreibung wird nochmals im Detail auf die verschiedenen Ausgestaltungen des Käfig und ihre jeweiligen Vorteile im einzelnen eingegangen.

Vorteilhaft sind dabei Ausführungsformen der kombinierten Lager-Dämpfer-Einheit, bei denen der Käfig zylinderförmig ausgebildet ist.

Vorteilhaft sind weiter Ausführungsformen der kombinierten Lager-Dämpfer-Einheit, bei denen auf der Innenseite des Käfigs Stoßfänger angeordnet sind. Diese Stoßfänger dienen der Aufnahme von Längs- und Querbelastungen und der Abstützung des mit ihnen zusammenarbeitenden Gasbalgs.

Vorteilhaft sind Ausführungsformen der kombinierten Lager-Dämpfer-Einheit, bei denen die Stoßfänger sich in Richtung des mit ihnen zusammenwirkenden Gasbalgs verjüngen. Hierdurch kann die Progression der Stoßfänger und damit der Quer- und Längslagerung eingestellt werden, wobei die Feder- und Dämpfrate in direktem Zusammenhang zu dem Querschnitt des Stoßfängers steht. Beim Eintauchen des Gasbalgs in den bzw. in die Stoßfänger findet zunächst eine weiche Federung statt, die mit zunehmender Eintauchtiefe stärker wird. Entsprechend progressiv nimmt die Dämpfung zu.

Vorteilhaft sind Ausführungsformen der kombinierten Lager-Dämpfer-Einheit, bei denen ein zweiter Gasbalg vorgesehen ist.

Vorteilhaft sind dabei Ausführungsformen der kombinierten Lager-Dämpfer-Einheit, bei denen Stoßfänger vorgesehen sind und der zweite Gasbalg und die Stoßfänger in der Art zueinander angeordnet sind, daß dieser zweite Gasbalg mit den Stoßfängern zusammenarbeiten kann, um Längs- und Querkräfte aufzunehmen. Bei dieser Ausführungsform dient dann der erste Gasbalg der Aufnahme von vertikalen Belastungen, wohingegen der zweite Gasbalg Längs- und Querbelastungen aufnimmt. Die beiden Belastungsarten werden hierdurch völlig entkoppelt, wobei die Steifigkeiten beliebig d.h. bedarfsgerecht einstellbar sind.

Vorteilhaft sind dabei Ausführungsformen der kombinierten Lager-Dämpfer-Einheit, bei denen das Gas im Gasbalg im unbelasteten, montierten Zustand einen Druck von 1,5 bis 10 bar, vorzugsweise einen Druck von 2 bis 5 bar aufweist.

Die zweite Teilaufgabe wird gelöst durch eine Verwendung, die dadurch gekennzeichnet, daß die kombinierte Lager-Dämpfer-Einheit zur Aufnahme einer Brennkraftmaschine im Motorraum eines Kraftfahrzeuges dient und zu diesem Zweck zwischen Karosserie und Brennkraftmaschine angeordnet wird.

Im folgenden wird die Erfindung anhand von drei Ausführungsbeispielen gemäß den Figuren 1 bis 6 näher beschrieben. Hierbei zeigt:
- Fig. 1: schematisch eine erste Ausführungsform der kombinierten Lager-Dämpfer-Einheit,
- Fig. 2: schematisch eine zweite Ausführungsform der kombinierten Lager-Dämpfer-Einheit,
- Fig. 3: schematisch eine dritte Ausführungsform der kombinierten Lager-Dämpfer-Einheit,
- Fig. 4: die Dämpfung des Geräusches der Dieselselbstentzündung - bei einer kombinierten Lager-Dämpfer-Einheit einerseits und bei einem herkömmlichen Gummilager andererseits - in Form eines Balkendiagramms bei verschiedenen Drehzahlen,
- Fig. 5: den Diesel Knocking Index (DKI) gemessen im Fahrzeuginneren - bei einer kombinierten Lager-Dämpfer-Einheit einerseits und bei einem herkömmlichen Gummilager andererseits - in Form eines Balkendiagramms bei verschiedenen Drehzahlen, und
- Fig. 6: die spektrale Dämpfung in vertikaler Richtung (z-Achse) - bei einer kombinierten Lager-Dämpfer-Einheit einerseits und bei einem herkömmlichen Gummilager andererseits - in Form eines Liniendiagramms für Frequenzen zwischen 400 und 5000 Hz.

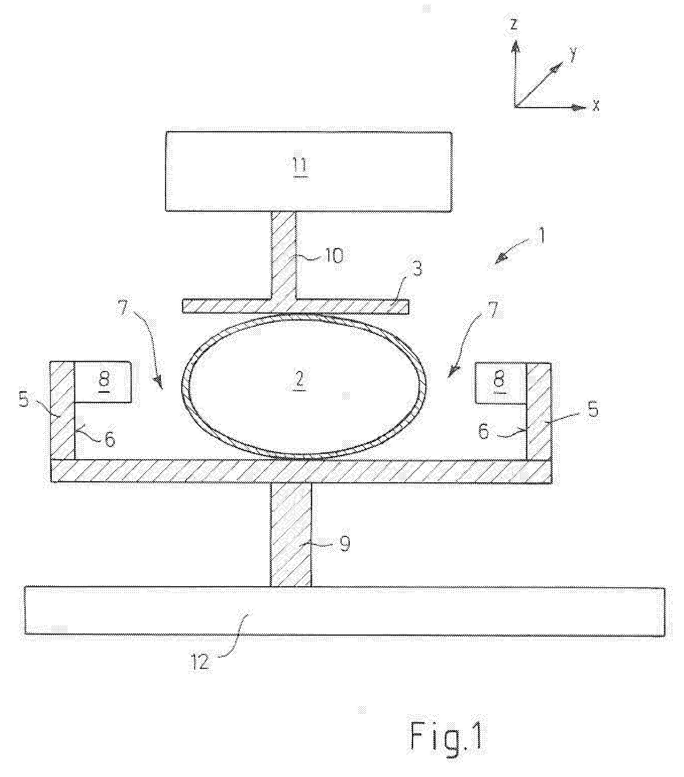

Figur 1 zeigt schematisch eine erste Ausführungsform der kombinierten Lager-Dämpfer-Einheit 1, welche zwischen der Brennkraftmaschine d. h. dem Motor 11 und der Karosserie d. h. im vorliegenden Ausführungsbeispiel dem Längsträger 12 angeordnet ist.

Die kombinierte Lager-Dämpfer-Einheit 1 umfaßt einen Gasbalg 2 und einen auf den Gasbalg 2 wirkenden Stempel 3, wobei der Stempel 3 motorseitig und der mindestens eine Gasbalg 2 karosserieseitig angeordnet ist.

Der Gasbalg 2 ist in einen Käfig 5 eingebettet, wobei der Käfig 5 in der Art dimensioniert ist, daß der Gasbalg 2 im unbelasteten Zustand von der Innenseite 6 des Käfigs 5 beabstandet angeordnet ist, so daß sich zwischen der Innenseite 6 des Käfigs 5 und dem Gasbalg 2 ein Spalt 7 ausbildet. Der Käfig 5 wird karosserieseitig von einer ersten Halterung 9 und der Stempel 3 motorseitig von einer zweiten Halterung 10 getragen, so daß die kombinierte Lager-Dämpfer-Einheit 1 beidseitig zwischen Karosserie 12 und Motor 11 fixiert und gelagert ist. Der Stempel 3 ist bei dem in Figur 1 dargestellten Ausführungsbeispiel mit der zweiten Halterung 10 als einstückiges Bauteil ausgeführt.

Der Gasbalg 2 ist einseitig am Stempel 3 fixiert (nicht dargestellt), kann aber - relativ zum Längsträger 12 - auf der Käfiginnenseite 6 gleiten. Folglich bleibt der Gasbalg 2 in Längs- und Querrichtung x, y beweglich und nimmt ausgehend von der in Figur 1 dargestellten Momentaufnahme zunächst und primär vertikale Belastungen auf. Diese Ausführungsform hat den Vorteil, daß die Belastungen nahezu vollständig vom Gas aufgenommen werden und der Anteil der Federung und Dämpfung, welcher sich durch die Deformation des Gasbalgs 2 an sich d.h. des Gasbalgmaterials ergibt, gering gehalten wird.

Eine Deformation des Gasbalgmaterials, welches in der Regel Gummi ist, wäre einer Federung und Dämpfung nach Art eines herkömmlichen Gummilagers ähnlich und würde auf eine Lagerung - d. h. Federung und Dämpfung - mittels Gummi, welche durch den erfindungsgemäßen Lösungsvorschlag gerade vermieden werden soll, hinauslaufen.

Anders wäre dies bei einer beidseitiger Fixierung d. h. bei einer Fixierung des Gasbalgs 2 sowohl am Stempel 3 als auch am Käfig 5. Hier würde bei einer Querund Längsbelastungen x, y der kombinierten Lager-Dämpfer-Einheit 1 eine elastische Deformation des Gasbalgs 2 an sich d.h. des Gasbalgmaterials stattfinden.

Grundsätzlich können die Quer- und Längsbelastungen x, y dadurch aufgenommen werden, daß sich der Gasbalg 2 an den Innenwänden 6 des Käfigs 5 abstützt. Dabei würden aber die Belastungen in allen drei Hauptbelastungsrichtungen x, y und z von einem Gasbalg 2 mit ein- und demselben Gasdruck aufgenommen und damit von einem Element welches in allen Richtungen über die gleiche Steifigkeit verfügt. Um die Steifigkeiten beeinflussen zu können, werden bei der in Rede stehenden Ausführungsform gemäß Figur 1 folglich noch Mittel vorgesehen, mit denen die Aufnahme von Quer- und Längsbelastungen x, y ermöglicht wird.

Die in Figur 1 dargestellte Ausführungsform einer kombinierten Lager-Dämpfer-Einheit 1 ist hierzu auf der Innenseite 6 des Käfigs 5 mit Stoßfängern 8 ausgestattet. Wandert der Gasbalg 2 infolge Quer- und Längsbelastungen weit genug in x- oder y-Richtung, stößt er gegen die auf der Innenseite 6 angeordneten Stoßfänger 8 und federt bzw. dämpft die Belastungen ab.

Über die Art der Stoßfänger 8, insbesondere der Geometrie, kann entscheidend Einfluß auf das Feder- und Dämpfverhalten in Längs- und Querrichtung x, y genommen werden und zwar unabhängig voneinander, indem in Längs- und Querrichtung x, y auf der Innenseite 6 des Käfigs 5 unterschiedliche Stoßfänger 8 verwendet werden.

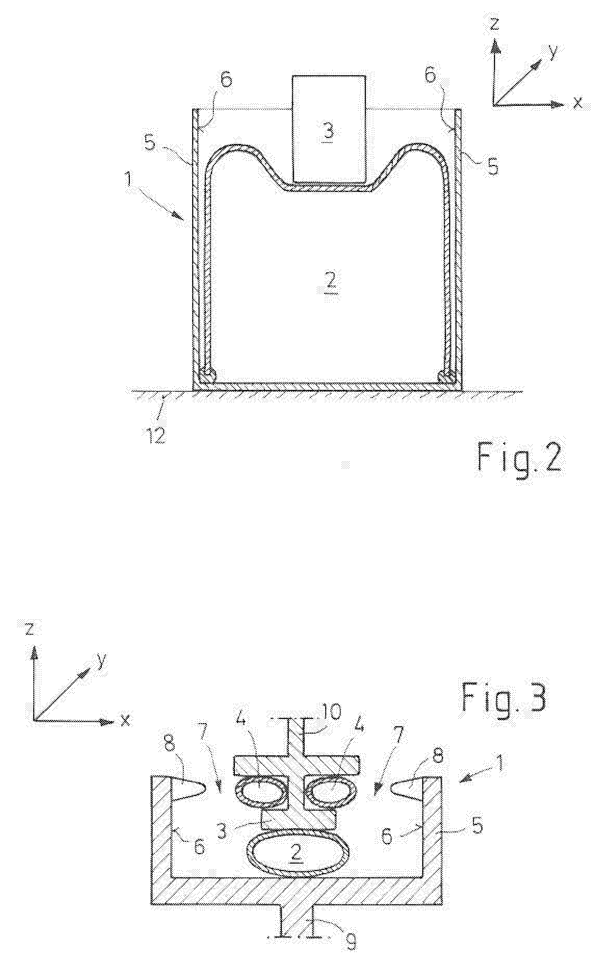

Figur 2 zeigt schematisch eine zweite Ausführungsform der kombinierten Lager-Dämpfer-Einheit 1. Im Unterschied zu der in Figur 1 dargestellten Lager-Dämpfer-Einheit 1 ist die zweite Ausführungsform mit einem Käfig 5 ausgestattet, bei dem bereits im unbelasteten Zustand des Gasbalgs 2 die Innenwände 6 des Käfigs 5 direkt am Gasbalg 2 anliegen. Im übrigen wird bezug genommen auf Figur 1. Für dieselben Bauteile wurden dieselben Bezugszeichen verwendet.

Bei der Ausführungsform gemäß Figur 2 dient der Käfig 5 gewissermaßen als Stützkorsett für den Gasbalg 2 , welcher selbst über keine allzu gestaltfeste äußere Form verfügt und ohne Gasfüllung in sich zusammenfallen würde. Der Gasbalg 2 stützt sich an den Innenwänden 6 des Käfigs 5 ab. Er besitzt daher lediglich die Fähigkeit vertikale Belastungen aufzunehmen

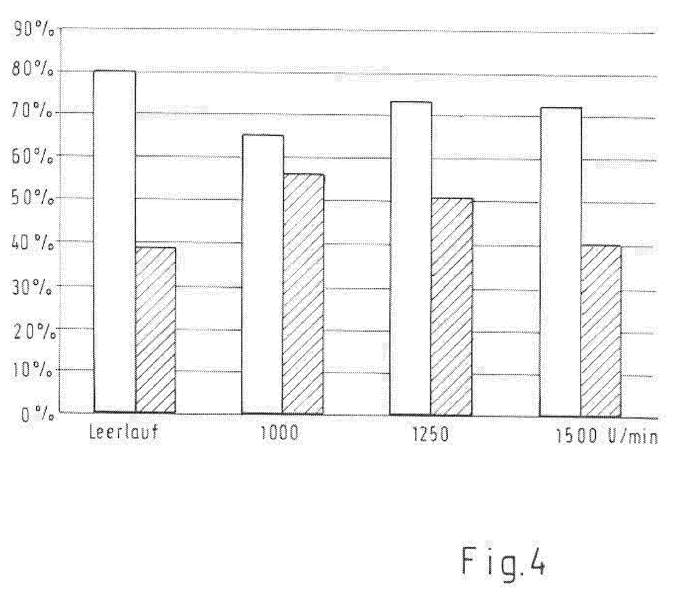

Bei der in Figur 2 dargestellten Ausführungsform handelt es sich um einen Prototypen der kombinierten Lager-Dämpfer-Einheit 1, welche gezielt in dieser Art ausgelegt wurde, um ausschließlich vertikale Belastungen aufnehmen zu können. Mit ihr soll im Rahmen von Versuchen die erfindungsgemäße Motorlagerung grundsätzlich auf ihre Wirksamkeit geprüft werden. Diese Ausführungsform liegt den noch zu diskutierenden Diagrammen gemäß den Figuren 4 bis 6 zugrunde.

Figur 3 zeigt schematisch eine dritte Ausführungsform der kombinierten Lager-Dämpfer-Einheit 1. Im Unterschied zu der in Figur 1 dargestellten Lager-Dämpfer-Einheit 1 ist die dritte Ausführungsform mit einem zweiten Gasbalg 4 ausgestattet, der für die Federung und Dämpfung von Belastungen in Längs- und Querrichtung x, y vorgesehen ist. Im übrigen wird bezug genommen auf Figur 1. Für dieselben Bauteile wurden dieselben Bezugszeichen verwendet.

Der zweite Gasbalg 4 ist oberhalb des ersten Gasbalgs 2 und oberhalb des Stempels 3 angeordnet und nimmt zusammen mit den gegenüberliegenden Stoßfängern 8, welche auf der Innenseite 6 des Käfigs 5 angeordnet sind, die Belastungen in Längsund Querrichtung x, y auf. Der zweite Gasbalg 4 ist torusförmig ausgebildet und ringförmig um den Schaft des Stempels 3 gelegt. Die mit dem zweiten Gasbalg 4 zusammenwirkenden Stoßfänger 8 verjüngen sich in Richtung des Gasbalgs 4, wodurch eine progressive Federung und Dämpfung in Längs- und Querrichtung x, y realisiert wird. Vertikale Belastungen werden vom zweiten Gasbalg 4 nicht aufgenommen.

Hierfür ist ausschließlich der erste, unterhalb des Stempels 3 angeordnete Gasbalg 2 vorgesehen, der wiederum keine Belastungen in Längs- und Querrichtung x, y abfedern und/oder dämpfen muß.

Die in Figur 3 dargestellte Ausführungsform zeichnet sich durch die völlige Entkopplung der Belastungen in vertikaler Richtung z einerseits und in Längs- bzw. Querrichtung x, y andererseits aus. Für beide Gruppen von Belastungen sind unterschiedliche Baugruppen, nämlich ein erster und ein zweiter Gasbalg 2, 4 vorgesehen.

Figur 4 zeigt die Dämpfung (auf der y-Achse in Prozent) des Geräusches der Dieselselbstentzündung, des sogenannten Dieselnagelns, in Form eines Balkendiagramms bei verschiedenen Drehzahlen (auf der x-Achse in Umdrehungen pro Minute). Es werden zwei Lagertypen gegenübergestellt, nämlich ein herkömmliches Gummilager und eine erfindungsgemäße kombinierte Lager-Dämpfer-Einheit (schraffiert), um auf diese Weise die mit dem neuartigen pneumatischen Lager erzielten Verbesserungen gegenüber herkömmlichen Motorlagerungen zu veranschaulichen. Für die Messungen wurde die Lagerung eines Personenkraftfahrzeuges auf der rechten Seite der Brennkraftmaschine gewählt.

Es ist ersichtlich, daß die pneumatische Lager-Dämpfer-Einheit im Leerlauf und bei sämtlichen Drehzahlen - 1000 U/min, 1250 U/min und 1500 U/min - wesentlich besser die vom Motor auf die Karosserie mittels Körperschalleinleitung übertragenen Schwingungen dämpft, wobei sich die deutlichste Verbesserung gegenüber herkömmlichen Gummilagern bei 1500 U/min zeigt.

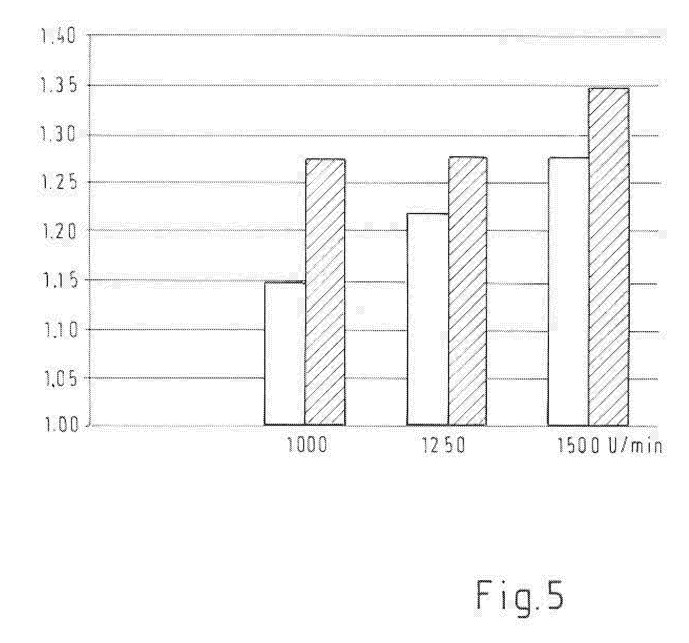

Figur 5 zeigt den im Fahrzeuginneren eines Pkw's gemessenen Diesel Knocking Index (DKI auf der y-Achse) in Form eines Balkendiagramms bei verschiedenen Drehzahlen (auf der x-Achse in Umdrehungen pro Minute). Es werden zwei Lagertypen gegenübergestellt, nämlich ein herkömmliches Gummilager und eine erfindungsgemäße kombinierte Lager-Dämpfer-Einheit (schraffiert), um auf diese Weise die mit dem neuartigen pneumatischen Lager erzielten Verbesserungen gegenüber herkömmlichen Motorlagerungen zu veranschaulichen.

Der DKI ist ein Maß für die Verschlechterung der Geräuschqualität in Bezug auf einen Referenzwert, der hier mit 1,0 angesetzt wurde. Je größer der Diesel Knocking Index ist, desto ausgeprägter ist die Verschlechterung. Mit anderen Worten gesagt: je niedriger der DKI, desto günstiger für den Fahrkomfort.

Wie bereits bei der in Figur 4 dargestellten Dämpfung werden auch bei dem im Fahrzeuginneren gemessenen Diesel Knocking Index (DKI) mit der pneumatischen Lager-Dämpfer-Einheit die besseren Ergebnisse erzielt, wobei diese Verbesserung am signifikantesten bei 1000 U/min ist.

Der Umstand, daß der mittels der pneumatischen Motorlagerung erzielte Vorteil einerseits bei der in Figur 4 dargestellten Dämpfung bei der höchsten Drehzahl, nämlich 1500 U/min, und andererseits bei dem in Figur 5 dargestellten Diesel Knocking Index (DKI) bei der niedrigsten Drehzahl, nämlich 1000 U/min, zu erzielen ist, kann dadurch erklärt werden, daß im Rahmen der Messung der Dämpfung nur die Körperschalleinleitung über die Motorlagerung berücksichtigt wird und bei Ermittlung des DKI im Fahrzeuginneren auch das eigentliche Motorengeräusch, nämlich der von den Motoroberflächen als Luftschall abgestrahlte Körperschall, in die Messung eingeht.

Weiter kann aus Figur 5 geschlußfolgert werden, daß die Motorlagerung bei 1000 U/min für das Dieselnageln einen wesentlich relevanterer Übertragungsweg darstellt als bei 1500 U/min.

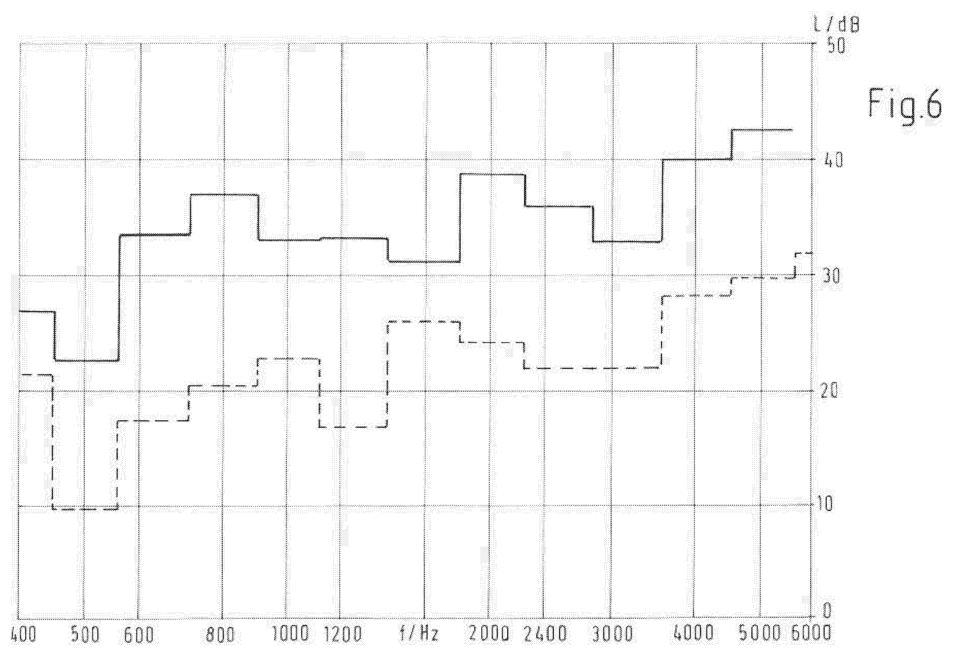

Figur 6 zeigt die spektrale Dämpfung (auf der y-Achse in dB) in vertikaler Richtung in Form eines Liniendiagramms für Frequenzen zwischen 400 und 5.000 Hz (x-Achse). Mit der pneumatischen Lager-Dämpfer-Einheit (durchgezogene Linie) werden bessere Ergebnisse erzielt als mit einem herkömmlichen Gummilager (strichpunktierte Linie).

Die Figuren 4 bis 6 zeigen, daß mit einer pneumatischen Motorlagerung eine signifikante Verbesserung gegenüber einer herkömmlichen Gummilagerung erzielt wird.

### Bezugszeichen

- 1: kombinierte Lager-Dämpfer-Einheit
- 2: erster Gasbalg
- 3: Stempel
- 4: zweiter Gasbalg
- 5: Käfig
- 6: Innenwand bzw. Innenseite des Käfigs
- 7: Spalt
- 8: Stoßfänger
- 9: erste Halterung
- 10: zweite Halterung
- 11: Brennkraftmaschine
- 12: Karosserie, Längsträger

- x: Längsrichtung
- y: Querrichtung
- z: Vertikale

## Patentansprüche

1. Kombinierte Lager-Dämpfer-Einheit (1) zur Aufnahme einer Brennkraftmaschine (11) im Motorraum eines Kraftfahrzeuges, welche zwischen Karosserie (12) und Brennkraftmaschine (11) angeordnet ist und diese miteinander verbindet,
**dadurch gekennzeichnet, daß**
die kombinierte Lager-Dämpfer-Einheit (1) mindestens einen Gasbalg (2) und einen auf den Gasbalg (2) wirkenden Stempel (3) umfaßt, wobei dieser mindestens eine Gasbalg (2) sowohl die Last der Brennkraftmaschine (11) in seiner Funktion als Lager trägt als auch die Schwingungsanregung der Karosserie (12) durch die Brennkraftmaschine (11) in seiner Funktion als Dämpfer mindert.

2. Kombinierte Lager-Dämpfer-Einheit (1) nach einem der vorherigen Ansprüche,
**dadurch gekennzeichnet, daß**
der Stempel (3) motorseitig und der mindestens eine Gasbalg (2) karosserieseitig angeordnet ist.

3. Kombinierte Lager-Dämpfer-Einheit (1) nach einem der vorherigen Ansprüche,
**dadurch gekennzeichnet, daß**
der mindestens eine Gasbalg (2) am Stempel (3) fixiert ist.

4. Kombinierte Lager-Dämpfer-Einheit (1) nach einem der vorherigen Ansprüche,
**dadurch gekennzeichnet, daß**
eine erste Halterung (9) vorgesehen ist, mit der die kombinierte Lager-Dämpfer-Einheit (1) karosserieseitig fixierbar ist.

5. Kombinierte Lager-Dämpfer-Einheit (1) nach einem der vorherigen Ansprüche,
**dadurch gekennzeichnet, daß**
eine zweite Halterung (10) vorgesehen ist, mit der die kombinierte Lager-Dämpfer-Einheit (1) motorseitig fixierbar ist.

6. Kombinierte Lager-Dämpfer-Einheit (1) nach einem der vorherigen Ansprüche,
**dadurch gekennzeichnet, daß**
ein Käfig (5) vorgesehen ist, in den der Gasbalg (2) eingebettet ist.

7. Kombinierte Lager-Dämpfer-Einheit (1) nach Anspruch 6,
**dadurch gekennzeichnet, daß**
der Käfig (5) zylinderförmig ausgebildet ist.

8. Kombinierte Lager-Dämpfer-Einheit (1) nach Anspruch 6 oder 7,
**dadurch gekennzeichnet, daß**
der mindestens eine Gasbalg (2) im unbelasteten Zustand von der Innenseite (6) des Käfigs (5) beabstandet angeordnet ist, so daß sich zwischen Innenseite (6) des Käfigs (5) und Gasbalg (2) ein Spalt (7) ausbildet.

9. Kombinierte Lager-Dämpfer-Einheit (1) nach einem der Ansprüche 6 bis 8,
**dadurch gekennzeichnet, daß**
auf der Innenseite (6) des Käfigs (5) Stoßfänger (8) angeordnet sind.

10. Kombinierte Lager-Dämpfer-Einheit (1) nach Anspruch 9,
**dadurch gekennzeichnet, daß**
die Stoßfänger (8) sich in Richtung des mit ihnen zusammenwirkenden Gasbalgs (2,4) verjüngen.

11. Kombinierte Lager-Dämpfer-Einheit (1) nach einem der vorherigen Ansprüche,
**dadurch gekennzeichnet, daß**
ein zweiter Gasbalg (4) vorgesehen ist.

12. Kombinierte Lager-Dämpfer-Einheit (1) nach Anspruch 11,
**dadurch gekennzeichnet, daß**
Stoßfänger (8) vorgesehen sind und der zweite Gasbalg (4) und die Stoßfänger (8) in der Art zueinander angeordnet sind, so daß dieser zweite Gasbalg (4) mit den Stoßfängern (8) zusammenarbeiten kann, um Längs- und Querkräfte aufzunehmen.

13. Kombinierte Lager-Dämpfer-Einheit (1) nach einem der vorherigen Ansprüche,
**dadurch gekennzeichnet, daß**
das Gas im Gasbalg (2,4) im unbelasteten, montierten Zustand einen Druck von 1,5 bis 10 bar aufweist.

14. Kombinierte Lager-Dämpfer-Einheit (1) nach Anspruch 13,
**dadurch gekennzeichnet, daß**
das Gas im Gasbalg (2,4) im unbelasteten, montierten Zustand einen Druck von 2 bis 5 bar aufweist.

15. Verwendung einer kombinierten Lager-Dämpfer-Einheit (1) nach einem der vorherigen Ansprüche,
**dadurch gekennzeichnet, daß**
die kombinierte Lager-Dämpfer-Einheit (1) zur Aufnahme einer Brennkraftmaschine (11) im Motorraum eines Kraftfahrzeuges dient und zu diesem Zweck zwischen Karosserie (12) und Brennkraftmaschine (11) angeordnet wird.
